# EUROPEAN PATENT SPECIFICATION

(11) **EP 2 540 472 B1**
(45) Date of publication and mention of the grant of the patent: **26.03.2014**
(21) Application number: 12004500.0
(22) Date of filing: 14.06.2012
(51) Int. Cl.: B29C 45/83, B29C 45/50

(54) **Injection device**
Spritzgiessvorrichtung
Dispositif d'injection

(30) Priority: 29.06.2011 JP 2011144675
(43) Date of publication of application: 02.01.2013
(73) Proprietor: Sumitomo Heavy Industries, Ltd., Tokyo 141-6025 (JP)
(72) Inventor: Tatsumi, Yutaka, Inage-ku Chiba-shi Chiba 263-0001 (JP)
(74) Representative: Wimmer, Hubert

(56) References cited:
- EP-A2- 1 293 325
- JP-A- 2000 052 394
- JP-A- 2004 092 842

## Description

### BACKGROUND OF THE INVENTION

### 1. Field of the Invention

The present invention generally relates to an injection device, and more specifically to an injection device having a lubricant structure that supplies grease to a spline engagement portion.

### 2. Description of the Related Art

Conventionally, an injection molding machine is configured to fill a cavity space of a die unit with resin heated and melted in a heating cylinder at high pressure and to obtain a molded product by cooling and solidifying the resin in the cavity space. This injection molding machine includes a mold clamping device, injection device and the like.

The mold clamping device includes a fixed platen, a movable platen, a toggle mechanism and the like. The movable platen is driven by the toggle mechanism, and by allowing the movable platen to go back and forth relative to the fixed platen, mold closing, mold clamping and mold opening of the die unit are performed.

Moreover, the injection device includes a heating cylinder, a screw, an injection nozzle, a drive unit and the like. The heating cylinder heats and melts the resin provided from a hopper. The screw is provided in the heating cylinder rotatable and movable back and forth. The injection nozzle is provided at a tip of the heating cylinder, and the resin melted in the heating cylinder is injected into the cavity space through the injection nozzle.

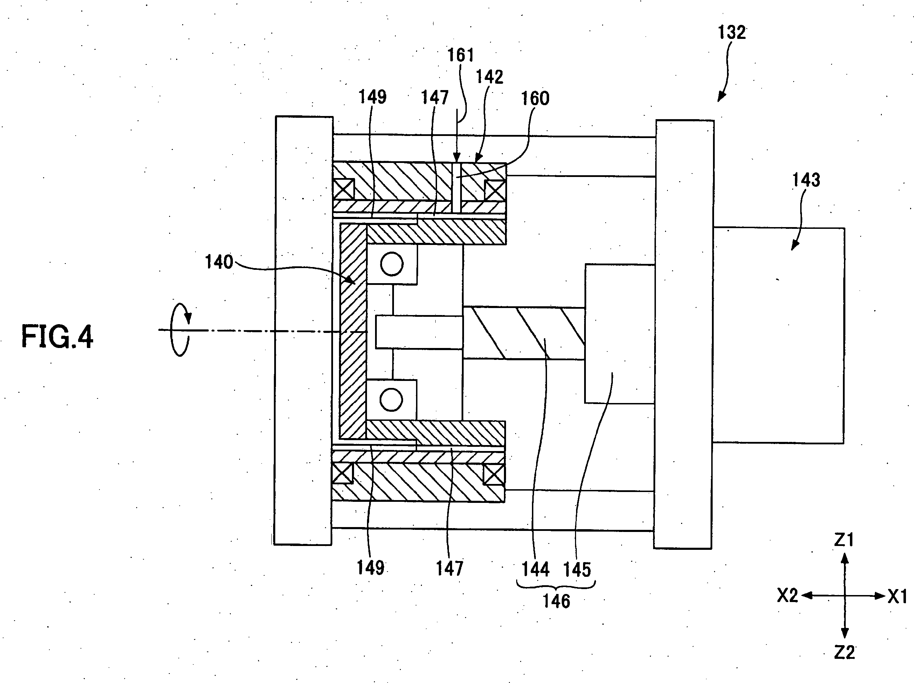

FIG. 4 is an outline configuration view of a conventional drive unit 132. As shown in the drawing, the conventional drive unit 132 includes a rotary slide member 140 connected to a screw (which is omitted in FIG. 4), a plasticizing motor 142 to rotate the screw by rotating the rotary slide member 140, an injection motor 143 to move the screw back and forth by moving the rotary slide member 140 back and forth (i.e., moving in X1 and X2 directions) and the like. Resin is measured by moving the screw backward by the drive unit 132, and the resin is injected from the nozzle by moving the screw forward.

Here, the plasticizing motor 142 is needed to be configured to be able to move the rotary slide member 140 in the X1 and X2 directions and to rotate the rotary slide member 140. Because of this, the drive unit 132 is configured to include spline lines 149 in which a spline nut 147 including spline threads (which are female spline threads) is formed on a rotor of the plasticizing motor 142, and male spline threads are formed on the outer periphery of the rotary slide member 140.

Moreover, by engaging the spline nut 147 and the spline lines 149 by spline engagement, the rotary slied member 140 is configured to be movable back and forth in the X1 and X2 directions (slidable) relative to the plasticizing motor 142 and rotatable by the plasticizing motor 142.

In the meantime, in a region where the spline nuts 147 and the spline lines 149 are engaged by the spline engagement, lubrication is needed to be performed with a lubricant such as grease to achieve a smooth back and forth movement of the rotary slide member 140. Conventionally, the drive unit 132 is configured so that a lubricant supply hole 160 that connects the spline engagement location with the outside of the plasticizing motor 142 is formed in the plasticizing motor 142, and the lubricant is supplied to the spline engagement location from the outside through the lubricant supply hole (see JP 2000-061656 A).

However, in the conventional injection device, there is a concern that the structure becomes complicated because the lubricant is supplied to the spline engagement location from the outside of the plasticizing motor 142.

JP 2004-092842 A discloses a lubricating device which has a drive part; a first rotor rotated by driving the drive part and having a cylindrical part; a second rotor having one end contained in the cylindrical part and rotatively situated at the first rotor; a support member for supporting the second rotor at the first rotor; a lubricant chamber containing a lubricant to lubricate the supporting member; a lubricant feed passage to feed the lubricant to the lubricant chamber; and a sealing member to seal the lubricant chamber. Since the lubricant is supplied to the lubricant chamber and the lubricant chamber is sealed, the supporting member can be sufficiently lubricated even when a centrifugal force is exerted on the lubricant in the lubricant chamber with the rotation of the second rotor.

### SUMMARY OF THE INVENTION

Embodiments of the present invention provide a novel and useful injection device solving one or more of the problems discussed above.

More specifically, the object of the present invention is to provide an injection device that allows lubricant to be supplied with a simple configuration.

According to the present invention, there is provided an injection device as set forth in claim 1. Preferred embodiments of the present invention may be gathered from the dependent claims.

### BRIEF DESCRIPTION OF THE DRAWINGS

FIG. 1 is a view showing an injection molding machine provided with an injection device of an embodiment of the present invention;
FIG. 2 is a perspective view showing a part in cross-section of a plasticizing motor provided in an injection device of an embodiment;
FIG. 3 is an outline configuration view to illustrate a flow of lubricant; and
FIG. 4 is an outline configuration view to illustrate a flow of lubricant of a conventional example.

### DETAILED DESCRIPTION OF THE PREFERED EMBODIMENTS

A description is given below, with reference to drawings of embodiments of the present invention.

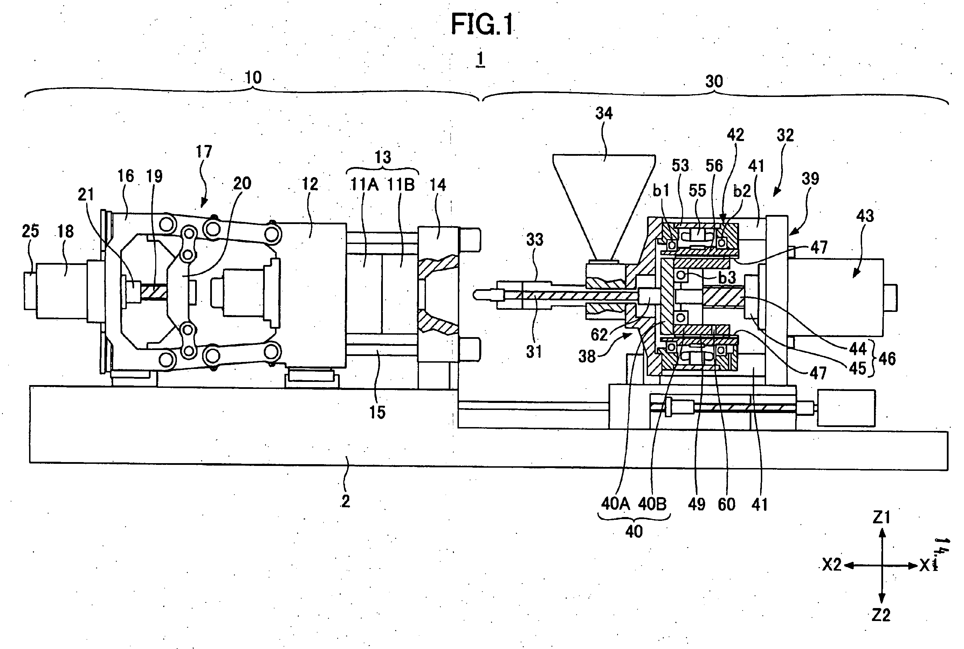

FIG. 1 shows an injection molding machine 1 to which an injection device of an embodiment of the present invention is applied. The injection molding machine 1 is roughly made up of a mold clamping device 10 and an injection device 30.

First, a description is given about the mold clamping device 10. The mold clamping device 10 includes a movable platen 12 to which a movable die 11A is attached, and a fixed platen 14 to which a fixed die 11B is attached. The movable die 11A and the fixed die 11B constitute a die unit 13. The movable platen 12 and the fixed platen 14 are coupled to each other by way of divers 15. The movable platen 12 and the fixed platen 14 can slide along the divers 15.

Moreover, the mold clamping device 10 includes a toggle mechanism 17 one end of which is coupled to the movable platen 12 and the other end of which is coupled to a toggle support 16. At the center of the toggle support 16, a ball screw shaft 19 is disposed.

The end on the arrow X2 direction side in the drawing of the ball screw shaft 19 is connected to a drive shaft of a mold clamping motor 18. Furthermore, the other end on the arrow X1 direction side of the ball screw shaft 19 is connected to a crosshead 20 of the toggle mechanism 17.

In the mold clamping device 10 configured as mentioned above, if the mold clamping motor 18 drives, rotation of the mold clamping motor 18 is transferred to a nut 21, and the nut 21 rotates. The rotation of the nut 21 is transformed into a translatory movement of the ball screw shaft 19, and therefore the crosshead 20 moves linearly. The toggle mechanism 17 operates due to this movement of the crosshead 20, and the movable platen 12 moves along the diver 15, by which the mold closing, mold clamping and mold opening to the die 13 are performed.

Here, a position detector 25 is connected to the rear end of the mold clamping motor 18. The position detector 25 detects a position of the crosshead 20 that moves with the rotation of the ball screw shaft 19, or a position of the movable platen 12 coupled to the crosshead 20 by way of the toggle mechanism 17, by detecting a number of rotations or a rotation amount of the mold clamping motor 18.

Next, a description is given about the injection device 30. The injection device 30 includes a screw 31 and a drive unit 32. The screw 31 is provided inside a heating cylinder 33, being configured to be rotatable and movable back and forth (i.e., movable in the X1 and X2 directions). In addition, a hopper 34 is provided at an upper position of the heating cylinder 33.

Moreover, the back end of the heating cylinder 33 is fixed to a front injection support 38. Also, a rear injection support 39 is disposed at a predetermined distance from the front injection support 38. Furthermore, coupling rods 41 are installed between the front injection support 38 and the rear injection support 39, by which the predetermined distance is maintained between the front injection support 38 and the rear injection support 39. In addition, the front injection support 38, the rear injection support 39 and the coupling rod 41 constitute an injection frame.

A coupling body 40A that has a round shape is integrally attached to the back end of the screw 31 (i.e., the end on the X1 direction side) by way of a coupler 62. Furthermore, a cylindrical support body 40B is fixed to the coupling body 40A. Hence, the coupling body 40A and the support body 40B constitute a rotary slide member 40 that rotates with the screw 31.

Inside the rotary slide member 40, a bearing b3 to rotatably support a ball screw shaft 44 that becomes a drive shaft and the like are provided. Accordingly, one side of the rotary slide member 40 is connected to the screw 31 and the other side is connected to the ball screw shaft 44.

Spline lines 49 that become a first spline are formed on the outer peripheral wall of the support body 40B that constitutes the rotary slide member 40. Moreover, a through hole 60 to supply lubricant is formed in the support body 40B. Here, for convenience of illustration, a description is given about the through hole 60 hereinafter.

A plasticizing motor 42 is attached to the front injection support 38 by using fixing bolts that are not shown in the drawing. Furthermore, the plasticizing motor 42 is configured to surround the rotary slide member 40 in a state of being attached to the front injection support 38. Then, the plasticizing motor 42 goes into a first drive status of rotating the rotary slide member 40 in a plasticizing process, and goes into a second drive status of limiting rotation transferred to the rotary slide member 40 in an injection process.

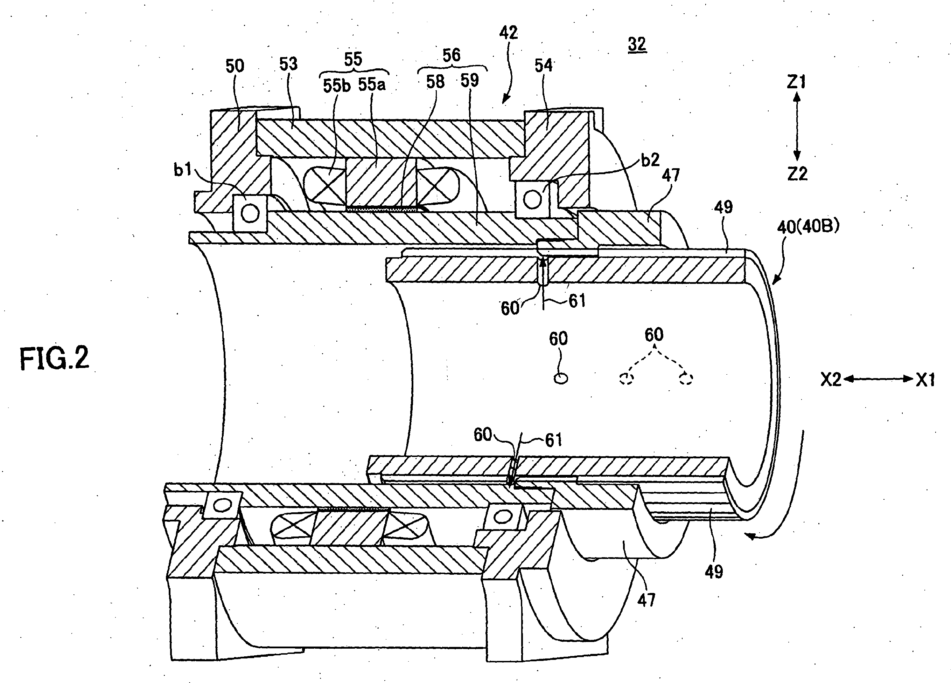

The plasticizing motor 42, as shown in FIG. 2 in addition to FIG. 1, includes a front circular body 50 attached to the front injection support 38, a sleeve 53 fixed to the front circular body 50, a rear circular body 54 attached to the back end of the sleeve 43, a stator 55 attached to the inside of the sleeve 53 in a radial direction, and a cylindrical rotor 56 provided in the stator 55 in the radial direction. In addition, a spline nut 47 that becomes a second spline is attached to the back end of the rotor 56 by bolts that are not shown in the drawing.

The stator 55 is provided so as to surround the rotary slide member 40. The stator 55 includes a core 55a attached to the sleeve 53 and a coil (or an inductor) 55b winding around the core 55a.

Moreover, the rotor 56 includes a magnet 58, a cylindrical body 59 and the like. The vicinity of the end in the X2 direction of the rotor 56 is supported by a bearing b1 rotatable relative to the front circular body 50, and the vicinity of the end in the X1 direction of the rotor 56 is supported by a bearing b2 rotatable relative to the rear circular body 54.

The cylindrical body 59 is configured to revolve coaxially with the rotary slide member 40. Furthermore, the magnet 58 is fixed to a site corresponding to the stator 55 in the outer peripheral surface of the cylindrical body 59. The rotor 56 made up of the magnet 58 and the cylindrical body 59 functions as an output shaft of the plasticizing motor 42.

On this occasion, the front circular body 50, the sleeve 53 and the rear circular body 54 constitute a case integrated with front injection support 38. Therefore, the front injection support 38 and the plasticizing motor 42 can be integrated, which allows the injection molding machine 1 to be downsized. In addition, by driving the plasticizing motor 42, rotation generated at the rotor 56 (more specifically, the cylindrical body 59) can be directly transferred to the rotary slide member 40.

A female spline is formed on the inner peripheral surface of the spline nut 47, and the female spline is configured to engage with a male spline including the spline lines 49 formed on the outer periphery of the support body 40B (i.e., rotary slide member 40) by the spline engagement.

Because of this, in the first drive status of the plasticizing motor 42, a rotative force that the plasticizing motor 42 generates is transferred to the rotary slide member 40 through the spline engagement. This causes the rotary slide member 40 to be driven to rotate by the plasticizing motor 42.

On the other hand, in the second drive status of the plasticizing motor 42, the plasticizing motor 42 is stopped (i.e., the rotation is constrained). Due to this, a constraint force generated by the plasticizing motor 42 is transferred to the rotary slide member 40 through the spline engagement, and therefore the rotation of the rotary slide member 40 is also constrained.

A ball screw 46 is disposed between the rotary slide member 40 and an injection motor 43. The ball screw 46 is made up of a ball screw shaft 44 and a ball nut 45 that are screwed together.

The front end of the ball screw shaft 44 (i.e., the end in the X2 direction) is supported by the bearing b3, being configured to be rotatable relative to the rotary slide member 40, and immovable in the axial direction. Also, the back end of the ball screw shaft 44 (i.e., the end on the X1 direction side) is connected to the injection motor 43 through a coupler (which is not shown in the drawing).

Next, a description is given about operation of the injection device 30 configured as mentioned above.

To begin with, if the plasticizing motor 42 is driven in an injection process (which is in a first drive status), rotation of the plasticizing motor 42 is transferred to the rotary slide member 40 through the spline engagement between the spline nut 47 and the spline lines 49, and the rotary slide member 40 rotates.

As discussed above, the screw 31 is connected to the rotary slide member 40 by way of the coupler 62. Therefore, by driving the plasticizing motor 42, the screw 31 rotates, by which resin that has fallen from the heating hopper 34 is moved forward in the heating cylinder 33 by the screw 31 because the resin held in a thread groove of the screw 31 is conveyed forward.

As the resin moves forward in the heating cylinder 33, the screw 31 goes backward in the heating cylinder 33. This leads the resin to be accumulated in a front portion of the screw head of the screw 31.

Furthermore, if the injection motor 43 is driven in an injection process, the rotation of the injection motor 43 is transferred to the ball screw shaft 44. The rotation of the ball screw shaft 44 is transformed from the rotary movement into a rotary and translatory movement. As a result, the ball screw shaft 44 goes forward, rotating.

At this time, the plasticizing motor 42 is in the second drive status, the rotation is stopped and a constraint force is generated. Then, the constraint force is transferred to the rotary slide member 40 through the spline engagement between the spline nut 47 and the spline lines 49, by which the screw 31 connected to the rotary slide member 40 goes forward (i.e., moves in the X2 direction) in a state without revolving.

In this manner, if the screw 31 advances, the resin accumulated in the forward portion of the screw head is injected from the injection nozzle at a predetermined injection pressure, and the cavity space of the die 13 is filled with the resin.

In the meantime, as mentioned above, it is necessary to transfer the rotative force generated by the plasticizing motor 42 to the rotary slide member 40 in the first drive status, and to allow the rotary slide member 40 to move in the axial direction, limiting the rotation of the rotary slide member 40 in the second drive status. For this reason, the injection device 30 is configured to lubricate the location where the spline nut 47 and the spline lines 49 are engaged by the spline engagement with the lubricant 61 so that the movements in the above mentioned respective drive statuses are performed smoothly.

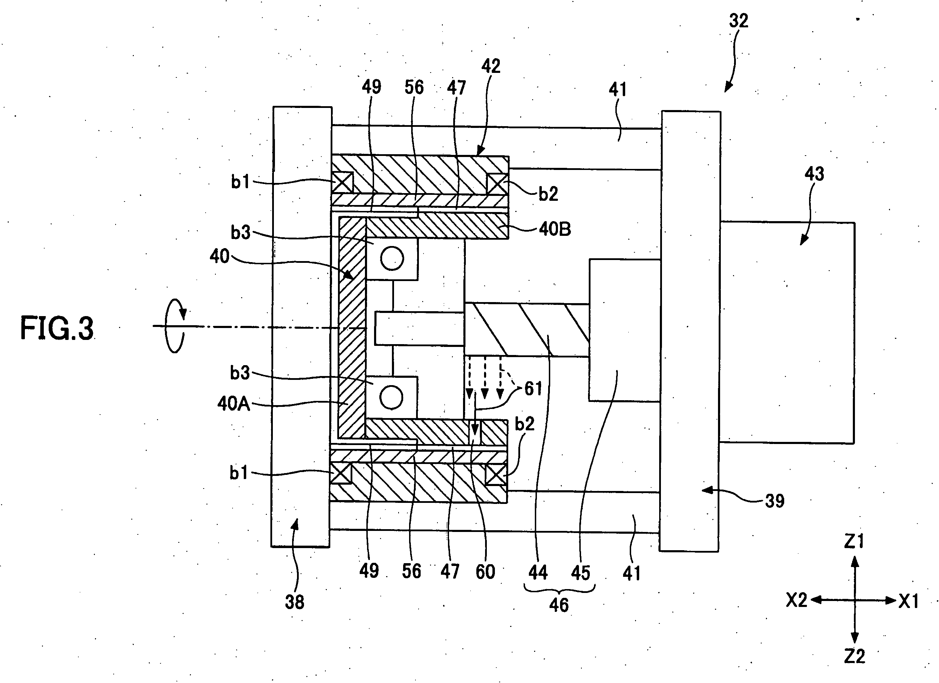

The injection molding machine 1 of the present embodiment is configured to supply the lubricant 61 to a location where the spline nut 47 and the spline lines 49 are engaged by the spline engagement by way of a supply passage. Hereinafter, a description is given about the supply passage of the lubricant 61 with reference to FIGS. 2 and 3.

The rotary slide member 40 includes through holes 60 that become supply passages to supply the lubricant 61 to the engagement location between the spline nut 47 and the spline lines 49 from the inside of the rotary slide member 40. These through holes 60 are formed so as to linearly penetrate through the support body 40B of the rotary slide member 40. Therefore, by the through holes 60, the inside of the rotary slide member 40 is communicated with the engagement locations between the spline nut 47 and the spline lines 49.

Moreover, installed positions of the through holes 60 are closer to the injection motor 43 side (i.e., X1 direction) than an installed position of the bearing b1. Furthermore, plural through holes 60 are formed in a circumferential direction of the rotary slide member 40 (e.g., four at a 90 degree distance in the present embodiment) (see FIG. 2).

However, forming positions and the forming numbers of the through holes 60 are not limited to this. In addition, the through holes 60 are formed not only in the circumferential direction for the support body 40B, but also may be formed in an axial direction so as to arrange the plural through holes 60 as shown by dashed lines in FIG. 2. Here, a diameter of the through holes 60 is not specifically limited, but for example, can be made 5-6 millimeters. Moreover, providing one through hole 60 in the rotary slide member 40 is possible. At least one through hole 60 may be formed in the rotary slide member 40.

By forming the through hole 60 configured as mentioned above, the inside of the rotary slide member 40 and the outside of the rotary slide member 40 are configured to be communicated with each other by the through hole 60. Accordingly, by supplying the lubricant 61 to the inside of the rotary slide member 40, supplying the lubricant 61 to the spline engagement location between the spline nut 47 and the spline lines 49 by way of the through hole 60 is possible.

Next, by using FIG. 3, a description is given about a flow of the lubricant 61 when the lubricant 61 is supplied via the through hole 60. Here in the following description, an example of using grease as the lubricant 61 is shown, but the lubricant 61 is not limited to the grease.

As stated above, the ball screw shaft 44 is rotatably connected to the rotary slide member 40 by way of the bearing b3. Since the ball screw 46 including the ball screw shaft 44 converts the rotative motion generated by the injection motor 43 into the linear motion, the ball screw 46 includes a screwed engagement portion between the ball screw shaft 44 and the spline nut 47. Accordingly, lubrication is performed by supplying the lubricant 61 to the screwed engagement portion between the ball screw shaft 44 and the spline nut 47 by a lubricating device not shown in the drawing.

A part of the lubricant 61 supplied to the ball screw 46, as shown by arrowed line in FIG. 3, falls into the inside of the rotary slide member 40 (more specifically, the inner periphery of the support body 40B), and accumulates thereon. As discussed above, the through hole 60 is formed so as to penetrate through the support body 40B, and the fallen lubricant 61 also accumulates on the through hole 60. Here, the arrow shown by dashed line in FIG. 3 shows the lubricant 61 that falls from the ball screw 46.

In this state, if the plasticizing motor 42 is driven and the rotary slide member 40 rotates, a centrifugal force due to the rotation acts on the lubricant 61 accumulated on the inner periphery of the support body 40B. Therefore, the lubricant 61 that has accumulated on a position in which the through hole 60 is formed goes into the inside of the through hole 60, and a flow that flows into the spline engagement location between the spline nut 47 and the spline lines 49 (which is shown by a solid line in FIG. 3) is generated.

In this manner, in the injection molding machine 1 of the present embodiment, by utilizing the centrifugal force generated by the rotation of the rotary slide member 40, the lubricant 61 is supplied to the spline engagement location of the outer periphery from the inner periphery of the support body 40B. By doing this, the lubricant 61 is smoothly and certainly supplied to the spline engagement location by allowing the centrifugal force to assist the supply, which makes it possible to smoothly slide the spline lines 49 relative to the spline nut 47.

Moreover, in the present embodiment, surplus lubricant 61 that falls onto the rotary slide member 40 from the ball screw 46 is utilized, and the surplus lubricant 61 is utilized for lubrication between the spline nut 47 and the spline lines 49. With this, individual process and device to supply the lubricant 61 for lubrication of the spline nut 47 and the spline lines 49 are not needed, and a configuration of the injection molding machine 1 can be simplified.

Furthermore, in the present embodiment, because the through hole 60 is formed in a groove portion of the spline lines 49, facilitation of processing and improvement of intensity can be achieved compared to a configuration of forming the whole length of the through hole 60 in a ridge portion, and the length of the through hole 60 can be shortened. In addition, since the through hole 60 is formed in a linear fashion, the length of the through hole 60 can be shorten, and a flowing resistance of the lubricant 61 can be reduced for this reason.

Accordingly, this makes it possible to promptly and certainly supply the lubricant 61 to the spline engagement location by way of the through hole 60 when the rotary slide member 40 rotates.

Thus, according to an injection device of the disclosure, because lubricant is supplied to an engagement location between first and second splines by way of a lubricant supply hole by a centrifugal force generated by rotation of a rotary slide member, the lubricant can be certainly supplied to the engagement location.

## Claims

1. An injection device (30) comprising:
a rotary slide member (40, 40A, 40B) formed into a cylindrical shape and provided with a first spline (49) on an outer periphery thereof, one side of which is connected to a screw (31) and the other side of which is connected to a ball screw (46) connected to an injection motor (43);
a plasticizing motor (42) provided to surround the rotary slide member (40, 40A, 40B), having a second spline (47) adapted to engage with the first spline (49) and to rotate the rotary slide member (40, 40A, 40B); and
a lubricating device configured to supply lubricant (61) to the ball screw (46);
wherein the rotary slide member (40, 40A, 40B) includes at least one supply passage (60) to supply the lubricant (61) from an inside of the rotary slide member (40, 40A, 40B) to an engagement location of the first spline (49) and the second spline (47), and the lubricant (61) is supplied from the ball screw (46).

2. The injection device according to claim 1,
wherein the supply passage (60) is a through hole to communicate the inside of the rotary slide member (40, 40A, 40B) with the engagement location of the first spline (49) and the second spline (47).

3. The injection device according to claim 2,
wherein plural through holes (60) are formed in a circumferential direction of the rotary slide member (40, 40A, 40B).

4. The injection device according to claim 2 or 3,
wherein the through hole (60) is provided closer to the injection motor side than a location where a bearing (b1) to support the ball screw (46) is provided in the rotary slide member (40, 40A, 40B).

5. The injection device according to any of claims 2 to 4,
wherein the through hole (60) is formed in a groove portion of the first spline (49).

6. The injection device according to any of claims 2 to 5,
wherein the through hole (60) has a linear shape.

## Patentansprüche

1. Einspritzvorrichtung (30), die Folgendes aufweist:
ein Drehschieberglied (40, 40A, 40B), das in eine zylindrische Form geformt ist und mit einem ersten Keil (49) auf einem Außenumfang von diesem vorgesehen ist, dessen eine Seite mit einer Schraube bzw. Schnecke (31) und dessen andere Seite mit einer Kugelumlaufspindel (46) verbunden ist, die mit einem Einspritzmotor (43) verbunden ist;
einen Plastifizierungsmotor (42), der so vorgesehen ist, dass er das Drehschieberglied (40, 40A, 40B) umgibt, und einen zweiten Keil (47) besitzt, der geeignet ist, um in Eingriff mit dem ersten Keil (49) zu stehen und um das Drehschieberglied (40, 40A, 40B) zu drehen; und
eine Schmiervorrichtung, die konfiguriert ist, um Schmiermittel (61) an die Kugelumlaufspindel (46) zu liefern;
wobei das Drehschieberglied (40, 40A, 40B) zumindest einen Lieferdurchlass (60) aufweist, um das Schmiermittel (61) von einer Innenseite des Drehschieberglieds (40, 40A, 40B) zu einer Eingriffsposition des ersten Keils (49) und des zweiten Keils (47) zu liefern, und das Schmiermittel (61) von der Kugelumlaufspindel (46) geliefert wird.

2. Einspritzvorrichtung gemäß Anspruch 1, wobei der Lieferdurchlass (60) ein Durchgangsloch ist, um die Innenseite des Drehschieberglieds (40, 40A, 40B) mit der Eingriffsposition des ersten Keils (49) und des zweiten Keils (47) zu verbinden.

3. Einspritzvorrichtung gemäß Anspruch 2, wobei mehrere Durchgangslöcher (60) in einer Umfangsrichtung des Drehschieberglieds (40, 40A, 40B) gebildet sind.

4. Einspritzvorrichtung gemäß Anspruch 2 oder 3, wobei das Durchgangsloch (60) dichter an der Seite des Einspritzmotors vorgesehen ist als eine Position an der ein Lager (b1) zum Tragen der Kugelumlaufspindel (46) in dem Drehschieberglied (40, 40A, 40B) vorgesehen ist.

5. Einspritzvorrichtung gemäß einem der Ansprüche 2 bis 4, wobei das Durchgangsloch (60) in einem Nutteil des ersten Keils (49) gebildet ist.

6. Einspritzvorrichtung gemäß einem der Ansprüche 2 bis 5, wobei das Durchgangsloch (60) eine lineare Form besitzt.

## Revendications

1. Dispositif d'injection (30) comprenant :
un élément coulissant rotatif (40, 40A, 40B) ayant une forme cylindrique et muni d'une première cannelure (49) sur une périphérie extérieure, dont un côté est connecté à une vis (31) et dont l'autre côté est connecté à une vis à billes (46) connectée à un moteur d'injection (43) ;
un moteur de plastification (42) prévu pour entourer l'élément coulissant rotatif (40, 40A, 40B), comportant une deuxième cannelure (47) adaptée à se mettre en prise avec la première cannelure (49) et à faire tourner l'élément coulissant rotatif (40, 40A, 40B) ; et
un dispositif de lubrification agencé pour fournir du lubrifiant (61) à la vis à billes (46) ;
dans lequel l'élément coulissant rotatif (40, 40A, 40B) comprend au moins un passage d'alimentation (60) pour fournir le lubrifiant (61) à partir de l'intérieur de l'élément coulissant rotatif (40, 40A, 40B) vers un emplacement de mise en prise de la première cannelure (49) et de la deuxième cannelure (47), et le lubrifiant (61) est fourni à partir de la vis à billes (46).

2. Dispositif d'injection selon la revendication 1, dans lequel le passage d'alimentation (60) est un trou traversant destiné à faire communiquer l'intérieur de l'élément coulissant rotatif (40, 40A, 40B) avec l'emplacement de mise en prise de la première cannelure (49) et de la deuxième cannelure (47).

3. Dispositif d'injection selon la revendication 2, dans lequel plusieurs trous traversants (60) sont formés dans une direction circonférentielle de l'élément coulissant rotatif (40, 40A, 40B).

4. Dispositif d'injection selon la revendication 2 ou 3,
dans lequel le trou traversant (60) est prévu plus près du côté du moteur d'injection que d'un emplacement où un roulement (b1) destiné à supporter la vis à billes (46) est prévu dans l'élément coulissant rotatif (40, 40A, 40B).

5. Dispositif d'injection selon l'une quelconque des revendications 2 à 4,
dans lequel le trou traversant (60) est formé dans une portion de gorge de la première cannelure (49).

6. Dispositif d'injection selon l'une quelconque des revendications 2 à 5,
dans lequel le trou traversant (60) à une forme linéaire.
